# EUROPÄISCHE PATENTSCHRIFT

(11) **EP 1 750 891 B1**
(45) Veröffentlichungstag und Bekanntmachung des Hinweises auf die Patenterteilung: **24.10.2007**
(21) Anmeldenummer: 05762339.9
(22) Anmeldetag: 23.06.2005
(51) Int. Cl.: B23K 26/04

(54) **VERFAHREN ZUR BESTIMMUNG DER FOKUSLAGE EINES LASERSTRAHLS**
METHOD FOR DETERMINING THE FOCAL POSITION OF A LASER BEAM
PROCEDE DE DETERMINATION DE LA POSITION FOCALE D'UN FAISCEAU LASER

(43) Veröffentlichungstag der Anmeldung: 14.02.2007
(73) Patentinhaber: TRUMPF Werkzeugmaschinen GmbH + Co. KG, 71254 Ditzingen (DE)
(72) Erfinder: SCHOLICH-TESSMANN, Wolfgang, 71032 Böblingen (DE); MILICH, Andreas, 71640 Ludwigsburg (DE)
(74) Vertreter: Kohler Schmid Möbus
(86) Internationale Anmeldenummer: PCT/EP2005/006805
(87) Internationale Veröffentlichungsnummer: WO 2006/136192

(56) Entgegenhaltungen:
- WO-A-98/50196
- DE-A1- 10 160 623
- US-A- 5 373 135
- US-A- 5 486 677
- US-B1- 6 791 057

## Beschreibung

Die Erfindung betrifft ein Verfahren zur Bestimmung der für einen Werkstückbearbeitungsprozess geeigneten Fokuslage eines Laserstrahls einer Laseranlage, insbesondere einer Laserschneidanlage, bei dem zumindest zwei unterschiedliche Fokuslagen eingestellt werden.

Um Werkstücke hinreichend genau bearbeiten zu können, sei es durch Laserschneiden oder Laserschweißen, ist es erforderlich, den Laserstrahl mit der Stelle, wo er die höchste Leistungsdichte aufweist, in Kontakt mit dem Werkstück zu bringen. Das Problem ist also, die schmalste Stelle des Laserstrahls zu finden. Dazu ist es beispielsweise bekannt, dass in ein Referenzwerkstück unterschiedliche Schlitze mit dem Laserstrahl geschnitten werden, wobei für jeden Schlitz eine unterschiedliche Fokuslage verwendet wird. Anschließend wird das Referenzwerkstück entnommen und wird die Schlitzbreite manuell gemessen. Die Fokuslage, mit der die geringste Schlitzbreite erreicht wurde, ist die für eine Werkstückbearbeitung geeignetste Fokuslage. Dieses Verfahren ist relativ aufwändig und nicht automatisierbar.

Aus der DE 198 57 694 A1 ist die Einstellung der Fokuslage eines auf ein Werkstück gerichteten Laserstrahls, der aus einem Bearbeitungskopf mit einer Fokusierungseinrichtung für den Laserstrahl austritt, beschrieben. Zunächst werden in die Oberfläche des Werkstücks mit Hilfe des Laserstrahls mehrere voneinander getrennte Spuren bei jeweils unterschiedlichen Abständen zwischen Bearbeitungskopf und Werkstück und ansonsten unter gleichen Bedingungen eingebrannt. Dabei wird die Stärke des entstehenden Plasmas für jede Spur getrennt gemessen. Sodann wird derjenige Abstand zwischen Bearbeitungskopf und Werkstück herausgesucht, für den die maximale Plasmastärke gemessen worden ist. Mit diesem Abstand wird anschließend die Laserbearbeitungsanlage kalibriert. Auch dieses Verfahren ist nur sehr schwer automatisierbar.

Aufgabe der vorliegenden Erfindung ist es, ein Verfahren bereit zu stellen, mit dem die Fokuslage bestimmt werden kann, wobei das Verfahren automatisierbar sein sollte.

Gelöst wird diese Aufgabe erfindungsgemäß auf überraschend einfache Art und Weise dadurch, dass bei einem Verfahren der eingangs genannten Art für unterschiedliche Fokuslagen des Laserstrahls bestimmt wird, ob und unter welchen Umständen zumindest der Randbereich des Laserstrahls in Kontakt mit einem Werkstück kommt. Es wird also erkannt, wann - in Abhängigkeit von einer einstellbaren Fokuslage - der Laserstrahl mit seinem Randbereich in Kontakt mit Material kommt. Bei unterschiedlichen Fokuslagen geschieht dies bei unterschiedlichen Abständen der Strahlachse des Laserstrahls von einer Kante des Werkstücks bzw. in Abhängigkeit von der Größe einer bereits erzeugten Durchgangsöffnung des Werkstücks. Das erfindungsgemäße Verfahren ist automatisierbar, so dass die Fokuslage automatisch ermittelt werden kann. Ein manuelles Vermessen eines Referenzwerkstücks kann daher entfallen.

Bei einer besonders bevorzugten Verfahrensvariante kann vorgesehen sein, dass zumindest eine die Umstände, unter denen zumindest der Randbereich des Laserstrahls in Kontakt mit dem Werkstück kommt, beschreibende Größe erfasst wird. Als die Umstände beschreibende Größen kommen beispielsweise der Abstand der Strahlachse zum Werkstück, insbesondere eines Rands des Werkstücks oder die Intensität von erfasster Strahlung, beispielsweise von Prozesslicht, in Frage.

Besonders bevorzugt ist es, wenn bestimmt wird, ob der Randbereich des Laserstrahls in Kontakt mit dem Werkstück kommt, indem von dem Werkstück oder einem Plasma abgestrahlte Strahlung detektiert wird. Insbesondere kann Licht mit einem Empfindlichkeitsmaximum bei einer Wellenlänge von einem Mikrometer erfasst werden. Dadurch kann die Messung besonders genau erfolgen. Denkbar, jedoch nicht so genau ist das Erfassen des Plasmaleuchtens, wenn ein Plasma bei der Laserbearbeitung erzeugt wird. Die Genauigkeit leidet darunter, dass das Plasmaleuchten relativ spät auftritt, wenn schon relativ viel Material des Werkstücks geschmolzen und verbraucht wurde. Weiterhin ist es denkbar, nicht reflektiertes Prozesslicht zu erfassen. Bei allen vorgehensweisen ist besonderen Wert darauf zu legen, dass möglichst frühzeitig erkannt wird, wenn der Randbereich des Laserstrahls in Kontakt mit dem Werkstück kommt.

Bei einer vorteilhaften Verfahrensvariante wird ausgehend von den ermittelten Umständen die geeignete Fokuslage oder eine weitere Fokuslage, für die wiederum erfasst wird, ob und unter welchen Umständen der Randbereich des Laserstrahls in Kontakt mit dem Werkstück kommt, bestimmt. Wenn sich aus den ermittelten Umständen ergibt, dass der Randbereich des Laserstrahls nicht in Kontakt mit dem Werkstück gerät, kann dies darauf hindeuten, dass die geeignete Fokuslage gefunden wurde, da beispielsweise der minimale Abstand der Strahlachse zum Werkstück gefunden wurde oder der Laserstrahl auf der Höhe des Werkstücks schmaler ist als eine im Werkstück vorher erzeugte Durchgangsöffnung. Alternativ, wenn die geeignete Fokuslage nicht gefunden wurde, kann aus den vorher ermittelten Umständen für andere Fokuslage ermittelt werden, in welche Richtung die Fokuslage für den nächsten Versuch verstellt werden muss, um sich der geeigneten Fokuslage anzunähern.

Bei einer vorteilhaften Verfahrensvariante wird ein Werkstück mit dem Laserstrahl, insbesondere mit unterschiedlichen Fokuslagen, angetastet, indem das Werkstück und der Laserstrahl aneinander angenähert werden, bis der Randbereich des Laserstrahls einen Bearbeitungsprozess, insbesondere Schneidprozess, am Werkstück auslöst. Dabei kann ein Werkstück mit dem Laserstrahl von einer oder mehreren Seiten angetastet werden. Alternativ ist es denkbar, in einem Werkstück die Seiten eines im Werkstück ausgebildeten Fensters mit dem Strahl anzutasten. Auf diese Art und Weise kann der Strahldurchmesser bei einer bestimmten Fokuslage ermittelt werden. Dieses Verfahren kann so lange wiederholt werden, bis der geringste Strahldurchmesser gefunden wurde. Die dazugehörende Fokuslage ist dann die geeignete Fokuslage des Laserstrahls für die Werkstückbearbeitung.

Dabei ist es besonders vorteilhaft, wenn der Laserstrahl abgeschaltet wird, sobald erkannt wird, dass der Laserstrahl in Kontakt mit dem Werkstück kommt. Durch diese Maßnahme wird das Werkstück möglichst wenig beschädigt. Außerdem kann dadurch die Genauigkeit der Fokuslagenbestimmung erhöht werden.

Bei einer besonders bevorzugten Ausgestaltung der Erfindung wird zunächst bei einer ersten Fokuslage eine Durchgangsöffnung in dem Werkstück erzeugt und wird anschließend mit zumindest einer weiteren Fokuslage das Erzeugen der Durchgangsöffnung wiederholt. Als Durchgangsöffnung kann beispielswiese ein Loch oder ein Schlitz im Werkstück erzeugt werden. Das Erzeugen eines Schlitzes hat den Vorteil, dass die Laseranlage für eine bestimmte Zeit in Betrieb ist und sich dadurch aufwärmt. Dadurch kann die Fokuslage bei erwärmter Laseranlage ermittelt werden, was den Bedingungen während einer Werkstückbearbeitung entspricht. Beispielsweise kann vorgesehen sein, dass zuerst ein Loch bzw. ein Schlitz mit einer beliebigen Fokuslage in einem dünnen Blech erzeugt wird (Referenz) und danach der Vorgang an derselben Position mit geänderter Fokuslage wiederholt wird. Entsteht in diesem Fall Prozesslicht, ist der Strahldurchmesser im Vergleich zum ersten Loch oder Schlitz größer. Entsteht kein Prozesslicht, ist der Strahldurchmesser im Vergleich zum ersten Loch oder Schlitz kleiner. Das Prozesslicht kann beispielsweise mit einer optoelektronischen Einheit gemessen werden. Insbesondere kann das Prozesslicht mit einem Sensor, einer Kamera, einem Lochspiegel oder dergleichen gemessen werden. In einem weiteren Verfahrensschritt kann der Vorgang des Erzeugens einer Durchgangsöffnung mit der ersten eingestellten Fokuslage wiederholt werden (Referenz) und bei dem anschließenden Einstich bzw. Schnitt eine Fokuslage mit entgegengesetzter Fokusdifferenz zum Referenzeinstich bzw. -schlitz wie beim ersten Versuch gewählt werden. Aus den beiden Versuchsergebnissen kann die Richtung für die Fokussuche bestimmt werden. Dies bedeutet, wenn der Referenzeinstich bzw. -schlitz mit der Fokuslage x durchgeführt wird, könnte der zweite Einstich bzw. Schlitz im ersten Versuch mit der Fokuslage x + y und im zweiten Versuch mit x - y erfolgen. Solange x nicht genau der gewünschten, geeigneten Fokuslage entspricht, wird nur bei einem der zwei Versuche beim jeweils zweiten Einstich bzw. Schlitz Prozesslicht entstehen. Aufgrund dieser Information ist die Richtung, in welcher der fokussierte Strahl auf der Blechoberfläche größer bzw. kleiner wird, bekannt, und man kann sich iterativ der geeigneten Fokuslage nähern. Mit Hilfe einer oben bereits erwähnten, insbesondere optoelektronischen Messeinheit für das Prozesslicht, kann dieser Vorgang automatisiert werden.

Eine weitere Möglichkeit der Fokuslagenbestimmung besteht darin, dass die Fokuslage kontinuierlich oder quasi-kontinuierlich durchgestimmt wird. Beispielsweise ist es denkbar, dass die Strahlachse einen festen Abstand von einer Werkstückkante aufweist. Wird anschließend die Fokuslage durchgestimmt, d.h. zwischen zwei Extremwerten kontinuierlich oder quasi-kontinuierlich verändert, und ist die Strahlachse nahe genug an der Werkstückkante angeordnet, wird für einige Fokuslagen Prozesslicht entstehen, während für andere Fokuslagen kein Prozesslicht entstehen wird. Entsteht Prozesslicht, bedeutet dies, dass der Laserstrahl auf der Höhe des Werkstücks einen relativ großen Durchmesser aufweist. Diese Fokuslage ist daher nicht für einen Laserbearbeitungsprozess geeignet. Gesucht wird nach denjenigen Fokuslagen, bei denen kein Prozesslicht entsteht. Als Größe, die die Umstände beschreibt, unter denen ein Randbereich des Laserstrahls in Kontakt mit dem Werkstück kommt, dient daher die Fokuslage.

Die vorstehend genannte Verfahrensvariante ist relativ ungenau, wenn der Laserstrahl nicht entlang des Werkstücks bewegt wird. Deshalb ist es vorteilhaft, um die Genauigkeit zu erhöhen, wenn der Laserstrahl und das Werkstück während des Durchstimmens der Fokuslage relativ zueinander bewegt werden. Dabei wird festgehalten, an welchen Relativpositionen von Laserstrahl und Werkstück der Laserstrahl und das Werkstück in Kontakt kommen, insbesondere Prozesslicht entsteht. Insbesondere kann der Laserstrahl entlang einer Seite des Werkstücks bewegt werden. Mit einer kontinuierlichen Durchstimmung der Fokuslage kann die Fokuslage, die für einen Laserbearbeitungsprozess geeignet ist, besonders schnell gefunden werden. Wenn der Laserstrahl entlang des Werkstücks bewegt wird, kann die Fokuslage bei aufgewärmter Laseranlage ermittelt werden.

Eine weitere Möglichkeit, die geeignete Fokuslage zu finden, besteht darin, in einem Werkstück einen Schnitt zu erzeugen, wobei während der Schnitterzeugung die Fokuslage durchgestimmt wird, und anschließend den Vorgang an derselben Stelle zu wiederholen, wobei während des zweiten Schnitts die Fokuslage mit einem Offset durchgestimmt wird.

Besonders bevorzugt ist es, wenn erfasst wird, unter welchen Umständen, insbesondere bei welchen Fokuslagen, der Randbereich des Laserstrahls mit der Oberseite oder der Unterseite des Werkstücks in Kontakt kommt. Wenn diese beiden Fokuslagen bestimmt sind, kann eine aus beiden Fokuslagen gemittelte Fokuslage ermittelt werden, die in der Mitte des Werkstücks, insbesondere des Blechs liegt. Dadurch kann der Laserstrahl auf die Mitte des Blechs fokusiert werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die einzelnen Merkmale können jeweils einzeln für sich oder zu mehreren in beliebigen Kombinationen bei Varianten der Erfindung verwirklicht sein.

In der schematischen Zeichnung sind Ausführungsbeispiele der Erfindung dargestellt, welche in der nachfolgenden Beschreibung näher erläutert werden.

Es zeigen:
- Fig. 1: eine schematische Darstellung eines Teils einer Laseranlage;
- Fig. 2a: einen Querschnitt durch ein Werkstück und einen Laserstrahl bei idealer Fokuslage des Laserstrahls;
- Fig. 2b: eine Darstellung zur Erläuterung des erfindungsgemäßen Verfahrens;
- Fig. 3: eine schematische Darstellung zur Erläuterung des Antastens eines Werkstücks;
- Fig. 4: eine schematische Darstellung zur Erläuterung des Durchstimmens des Laserstrahls;
- Fig. 5: eine alternative Ausführungsform zur Erläuterung des Antastens eines Werkstücks;
- Fig. 6a bis 6c: Darstellungen zur Erläuterung des Auffindens einer für das Laserschneiden geeigneten Fokuslage.

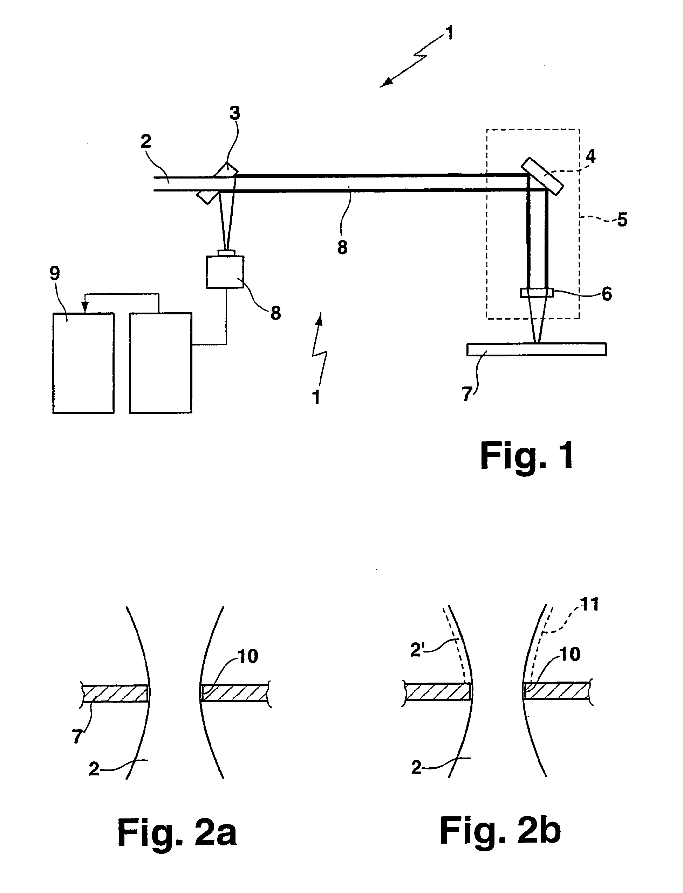

Gemäß der Fig. 1 wird in einer Laseranlage 1, insbesondere einer Laserschneidanlage, ein Laserstrahl 2 durch einen als fokussierenden Scraperspiegel ausgebildeten Spiegel 3 auf einen Umlenkspiegel 4 gelenkt, der in einem Bearbeitungskopf 5 angeordnet ist. Der Laserstrahl 2 wird mittels einer als Linse ausgebildeten Fokussierungseinrichtung 6 fokussiert und auf ein Werkstück 7 gelenkt. Wenn der Laserstrahl 2 auf das Werkstück 7 trifft, entsteht Strahlung, was durch die Linie 8 angedeutet ist. Diese wird über die Spiegel 4, 3 zurück reflektiert und durch den Spiegel 3 auf eine Messeinrichtung 8 gelenkt. Die Messeinrichtung 8 umfasst eine Fotodiode mit entsprechender Elektronik. Die Information der Messeinrichtung 8 wird an eine Auswerte- und Steuereinrichtung 9 weitergeleitet. In der Auswerte- und Steuereinrichtung 9 werden die Umstände bestimmt, unter denen der Laserstrahl 2, insbesondere ein Randbereich des Laserstrahls 2, in Kontakt mit dem Werkstück 7 gelangt ist. Insbesondere wird die zugeordnete Fokuslage, d.h. die Lage der Fokussiereinrichtung 6 und/oder die Höheneinstellung, d.h. der Abstand des Bearbeitungskopfs 5 zum Werkstück 7, erfasst.

In der Fig. 2a ist das Werkstück 7 im Querschnitt gezeigt, welches eine durch den Laserstrahl 2 erzeugte Durchgangsöffnung 10 aufweist. In der Fig. 2 ist die für einen Laserbearbeitungsprozess gewünschte Fokuslage dargestellt. Dies bedeutet, dass sich die schmalste Stelle des tailliert dargestellten Laserstrahls 2 genau auf der Höhe des Werkstücks 7, insbesondere in dessen Mitte, befindet. Dies bedeutet, dass ein Laserstrahl das kleinste Loch bzw. den schmalsten Schnittspalt erzeugt, wenn dessen Fokus genau in der Mitte eines Werkstücks 7, insbesondere eines dünnen Bleches liegt.

In der Fig. 2b ist gezeigt, dass bei einem ersten Versuch bzw. einem Referenzeinstich mit dem Laserstrahl 2 die Öffnung 10 erzeugt wurde. Wird anschließend die Fokuslage verstellt und wird an derselben Stelle versucht, eine Durchgangsöffnung zu erzeugen, so wird durch den Laserstrahl 2' eine Reaktion mit dem Werkstück 7 hervorgerufen, da der Randbereich 11 des Laserstrahls 2' auf das Werkstück 7 trifft und die Durchgangsöffnung 10 vergrößert. Dies gibt Aufschluss darüber, in welche Richtung die Fokuslage verstellt werden muss, um die optimale Fokuslage zu finden.

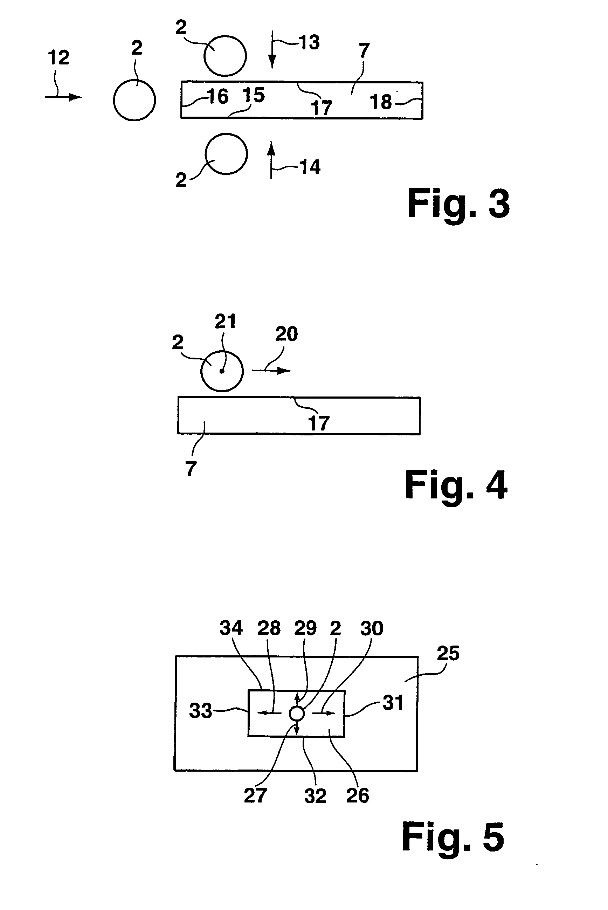

In der Fig. 3 ist eine Alternative gezeigt, mit der die Fokuslage bestimmt werden kann. In der Draufsicht ist ein Werkstück 7 gezeigt, das mit einem Laserstrahl 2 aus verschiedenen Richtungen, die durch die Pfeile 12., 13, 14 angedeutet sind, angetastet wird. Dies bedeutet, dass der Laserstrahl 2 an die Seiten 15, 16, 17, 18 des Werkstücks 7 herangefahren wird, bis ein Randbereich des Laserstrahls 2 in Kontakt mit dem Werkstück 7 kommt. Durch diese Vorgehensweise kann der Laserstrahldurchmesser bei einer eingestellten Fokuslage ermittelt werden. Daraus kann die Information gewonnen werden, ob der Durchmesser des Laserstrahls 2 klein genug ist, um möglichst kleine Schnittbreiten zu erzeugen. Die Fokuslage kann dabei so lange verändert werden, bis der geringste Strahldurchmesser gefunden wurde. Die Seiten bzw. Kanten 15 bis 18 des Werkstücks 7 werden beispielsweise durch Stanzen erzeugt, um eine genau definierte Kante zu erreichen.

In der Fig. 4 wird deutlich, wie der Laserstrahl 2 in Pfeilrichtung 20 entlang des Werkstücks 7 bewegt wird. Während der Bewegung in Pfeilrichtung 20 wird die Fokuslage des Laserstrahls 2 durchgestimmt, d.h. verändert. Dadurch kann eine Fokuslage gefunden werden, bei der der Randbereich des Laserstrahls 2 gerade nicht mehr in Kontakt mit der Seite 17 des Werkstücks 7 ist. Bei dieser Vorgehensweise ist es vorteilhaft, wenn bekannt ist, welchen Strahldurchmesser der fokussierte Laserstrahl hat. Dann kann der Laserstrahl 2 während der Bewegung in Pfeilrichtung 20 so angeordnet werden, dass seine Strahlachse 21 in etwa in einem Abstand von einem halben Strahldurchmesser des fokussierten Laserstrahls 2 von der Seite 17 angeordnet ist. Die Fokuslage, bei der kein Prozesslicht bzw. keine Strahlung erzeugt wird, ist die gesuchte Fokuslage.

In der Fig. 5 ist eine alternative Möglichkeit dargestellt, wie die Fokuslage durch Antasten eines Werkstücks 25 gefunden werden kann. In einem Fenster 26 des Werkstücks 25 wird der Laserstrahl 2 in den Pfeilrichtungen 27, 28, 29, 30 an die Seiten 31, 32, 33, 34 des Fenster 26 herangefahren. Durch diese Maßnahme kann die Ausbreitung des Laserstrahls 2 bei einer gegebenen Fokuslage in vier Quadranten ermittelt werden. Durch diese Vorgehensweise kann die Kernstrahldicke des Laserstrahls 2 ermittelt werden. Die Dicke des Werkstücks 25 bestimmt sich nach den Anforderungen an die Prozessgenauigkeit. Wünschenswert ist es, möglichst dünne Werkstücke zu verwenden, da dadurch die Fokuslage genauer bestimmt werden kann. Vorzugsweise sollte die Blechdicke ≤ 1mm sein. Die Blechdicke darf jedoch nicht zu dünn gewählt werden, da es dann zu einem Flattern des Werkstücks kommen kann, was die Messgenauigkeit beeinträchtigt.

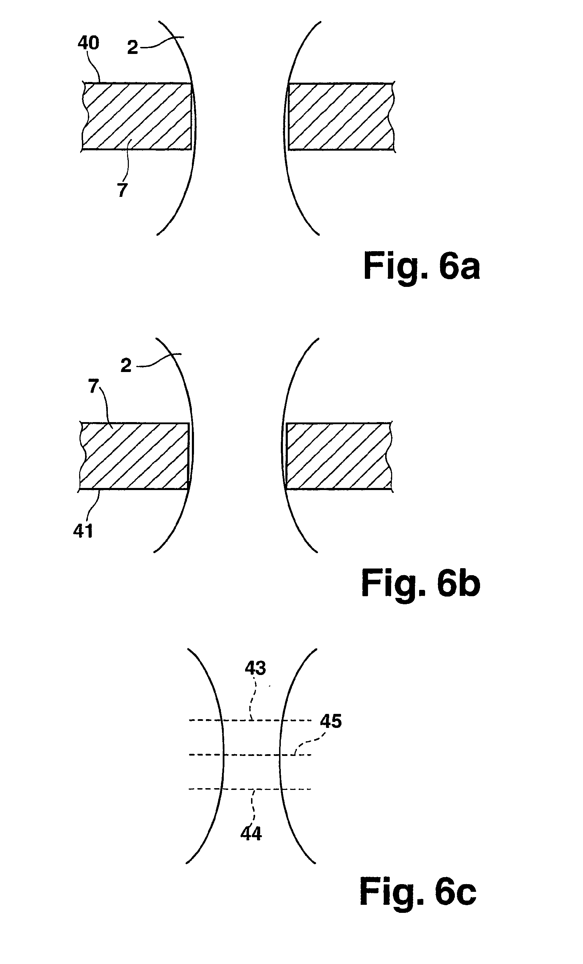

Die Darstellung der Fig. 6a verdeutlicht, dass es aufgrund der Dicke des Werkstücks 7 und der Form des Laserstrahls 2 schwierig ist, genau die Stelle mit der höchsten Leistungsdichte des Laserstrahls 2 zu finden. Gemäß der Darstellung der Fig. 6a ist der Laserstrahl 2 bzw. der Randbereich des Laserstrahls 2 mit der Oberseite 40 des Werkstücks 7 in Kontakt. Gemäß der Darstellung der Fig. 6b ist der Randbereich des Laserstrahls 2 mit der Unterseite 41 des Werkstücks 7 in Kontakt. Die Fokuslagen, bei denen der Laserstrahl 2 gerade mit der Oberseite oder Unterseite 40, 41 in Kontakt ist, lassen sich mit dem erfindungsgemäßen Verfahren relativ genau bestimmen. Gesucht ist jedoch eine Fokuslage, die zwischen diesen beiden Fokuslagen liegt. Dies ist in der Fig. 6c veranschaulicht. Die Fokuslage gemäß der Fig. 6a ist durch die gestrichelte Linie 43 dargestellt und die Fokuslage gemäß der Darstellung der Fig. 6b ist durch die gestrichelte Linie 44 dargestellt. Genau in der Mitte zwischen diesen Fokuslagen liegt die gesuchte Fokuslage, was durch die gestrichelte Linie 45 veranschaulicht ist.' Diese Fokuslage kann durch Mittelung bestimmt werden.

## Patentansprüche

1. Verfahren zur Bestimmung der für einen Werkstückbearbeitungsprozess geeigneten Fokuslage eines Laserstrahls (2, 2') einer Laseranlage (1), insbesondere einer Laserschneidanlage, bei dem zumindest zwei unterschiedliche Fokuslagen eingestellt werden, **dadurch gekennzeichnet, dass** für unterschiedliche Fokuslagen des Laserstrahls (2, 2') bestimmt wird, ob und/oder unter welchen Umständen zumindest der Randbereich (11) des Laserstrahls (2, 2') in Kontakt mit einem Werkstück (7, 25) kommt.

2. Verfahren nach Anspruch 1, **dadurch gekennzeichnet, dass** zumindest eine die Umstände, unter denen zumindest der Randbereich (11) des Laserstrahls (2, 2') in Kontakt mit dem Werkstück (7, 25) kommt, beschreibende Größe erfasst wird.

3. Verfahren nach einem der vorhergehenden Ansprüche, **dadurch gekennzeichnet, dass** bestimmt wird, ob der Randbereich (11) des Laserstrahls (2, 2') in Kontakt mit dem Werkstück (7,25) kommt, indem von dem Werkstück (7, 25) oder einem Plasma abgestrahlte Strahlung oder Prozesslicht detektiert wird.

4. Verfahren nach einem der vorhergehenden Ansprüche, **dadurch gekennzeichnet, dass** ausgehend von den ermittelten Umständen die geeignete Fokuslage oder eine weitere Fokuslage, für die wiederum erfasst wird, ob und unter welchen Umständen der Randbereich (11) des Laserstrahls (2, 2') in Kontakt mit dem Werkstück (7, 25) kommt, bestimmt wird.

5. Verfahren nach einem der vorhergehenden Ansprüche, **dadurch gekennzeichnet, dass** ein Werkstück mit dem Laserstrahl (2, 2') angetastet wird, indem Werkstück und Laserstrahl aneinander angenähert werden, bis der Randbereich des Laserstrahls einen Prozess am Werkstück auslöst.

6. Verfahren nach einem der vorhergehenden Ansprüche, **dadurch gekennzeichnet, dass** der Laserstrahl (2, 2') abgeschaltet wird; sobald erkannt wird, dass der Laserstrahl (2, 2') in Kontakt mit dem Werkstück (7, 25) kommt.

7. Verfahren nach einem der vorhergehenden Ansprüche, **dadurch gekennzeichnet, dass** zunächst bei einer ersten Fokuslage eine Durchgangsöffnung (10) in dem Werkstück (7, 25) erzeugt wird und anschließend mit zumindest einer weiteren Fokuslage das Erzeugen der Durchgangsöffnung (10) wiederholt wird.

8. Verfahren nach einem der vorhergehenden Ansprüche, **dadurch gekennzeichnet, dass** das Bestimmen der geeigneten Fokuslage iterativ erfolgt.

9. Verfahren nach einem der vorhergehenden Ansprüche, **dadurch gekennzeichnet, dass** die Fokuslage kontinuierlich oder quasi-kontinuierlich durchgestimmt wird.

10. Verfahren nach einem der vorhergehenden Ansprüche, **dadurch gekennzeichnet, dass** der Laserstrahl (2, 2') und das Werkstück (7, 25) während des Durchstimmens der Fokuslage relativ zueinander bewegt werden.

11. Verfahren nach einem der vorhergehenden Ansprüche, **dadurch gekennzeichnet, dass** erfasst wird, unter welchen Umständen, insbesondere bei welchen Fokuslagen, der Randbereich (11) des Laserstrahls (2, 2') mit der Oberseite (40) oder der Unterseite (41) des Werkstücks (7, 25) in Kontakt kommt.

## Claims

1. Method for establishing the focal point of a laser beam (2, 2') of a laser installation (1), in particular a laser cutting installation, which focal point is suitable for a workpiece processing operation, wherein at least two different focal points are adjusted, **characterised in that** it is established for various focal points of the laser beam (2, 2') whether and/or under what circumstances at least the peripheral region (11) of the laser beam (2, 2') comes into contact with a workpiece (7, 25).

2. Method according to claim 1, **characterised in that** there is measured at least one variable which describes the circumstances under which at least the peripheral region (11) of the laser beam (2, 2') comes into contact with the workpiece (7, 25).

3. Method according to either of the preceding claims, **characterised in that** it is established whether the peripheral region (11) of the laser beam (2, 2') comes into contact with the workpiece (7, 25) **in that** radiation or process light emitted by the workpiece (7, 25) or a plasma is detected.

4. Method according to any one of the preceding claims, **characterised in that**, on the basis of the circumstances established, the suitable focal point or an additional focal point is established, for which it is again measured whether and under what circumstances the peripheral region (11) of the laser beam (2, 2') comes into contact with the workpiece (7, 25).

5. Method according to any one of the preceding claims, **characterised in that** a workpiece is touched with the laser beam (2, 2') **in that** the workpiece and laser beam are moved towards each other until the peripheral region of the laser beam commences an operation on the workpiece.

6. Method according to any one of the preceding claims, **characterised in that** the laser beam (2, 2') is switched off as soon as it is detected that the laser beam (2, 2') has come into contact with the workpiece (7, 25).

7. Method according to any one of the preceding claims, **characterised in that** first, at a first focal point, a through-hole (10) is produced in the workpiece (7, 25) and subsequently, with at least one additional focal point, the production of the through-hole (10) is repeated.

8. Method according to any one of the preceding claims, **characterised in that** the suitable focal point is established in an iterative manner.

9. Method according to any one of the preceding claims, **characterised in that** the focal point is varied continuously or quasi-continuously.

10. Method according to any one of the preceding claims, **characterised in that** the laser beam (2, 2') and the workpiece (7, 25) are moved relative to each other whilst the focal point is varied.

11. Method according to any one of the preceding claims, **characterised in that** it is measured under what circumstances, in particular with which focal points, the peripheral region (11) of the laser beam (2, 2') comes into contact with the upper side (40) or the underside (41) of the workpiece (7, 25).

## Revendications

1. Procédé de détermination de la position focale appropriée à un processus d'usinage de pièces d'un faisceau laser (2, 2') d'une installation laser (1), en particulier d'une installation de découpage au laser, selon lequel on règle au moins deux positions focales différentes, **caractérisé en ce que** l'on détermine pour différentes positions focales du faisceau laser (2, 2') si et/ou dans quelles conditions au moins la zone de bord (11) du faisceau laser (2, 2') entre en contact avec une pièce (7, 25).

2. Procédé selon la revendication 1, **caractérisé en ce que** l'on saisit au moins une grandeur décrivant les conditions dans lesquelles au moins la zone de bord (11) du faisceau laser (2, 2') entre en contact avec la pièce (7, 25).

3. Procédé selon l'une des revendications précédentes, **caractérisé en ce que** l'on détermine si la zone de bord (11) du faisceau laser (2, 2') entre en contact avec la pièce (7, 25) en détectant un rayonnement ou une lumière de processus émis(e) par la pièce (7, 25) ou par un plasma.

4. Procédé selon l'une des revendications précédentes, **caractérisé en ce que** l'on détermine, à partir des conditions déterminées, la position focale appropriée ou une autre position focale pour laquelle on saisit de nouveau si et dans quelles conditions la zone de bord (11) du faisceau laser (2, 2') entre en contact avec la pièce (7, 25).

5. Procédé selon l'une des revendications précédentes, **caractérisé en ce qu'**une pièce est palpée avec le faisceau laser (2, 2') en rapprochant pièce et faisceau laser jusqu'à ce que la zone de bord du faisceau laser déclenche un processus sur la pièce.

6. Procédé selon l'une des revendications précédentes, **caractérisé en ce que** l'on coupe le faisceau laser (2, 2') dès que l'on détecte que le faisceau laser (2, 2') entre en contact avec la pièce (7, 25).

7. Procédé selon l'une des revendications précédentes, **caractérisé en ce que** l'on crée d'abord, à une première position focale, une ouverture traversante (10) dans la pièce (7, 25) et que l'on répète ensuite, avec au moins une autre position focale, la création de l'ouverture traversante (10).

8. Procédé selon l'une des revendications précédentes, **caractérisé en ce que** la détermination de la position focale appropriée a lieu de manière itérative.

9. Procédé selon l'une des revendications précédentes, **caractérisé en ce que** l'on fait varier la position focale de manière continue ou quasi continue.

10. Procédé selon l'une des revendications précédentes, **caractérisé en ce que** l'on déplace le faisceau laser (2, 2') et la pièce (7, 25) l'un par rapport à l'autre pendant la variation de la position focale.

11. Procédé selon l'une des revendications précédentes, **caractérisé en ce que** l'on saisit dans quelles conditions, en particulier dans quelles positions focales, la zone de bord (11) du faisceau laser (2, 2') entre en contact avec la face supérieure (40) ou la face inférieure (41) de la pièce (7, 25).
